Europäisches Patentamt

European Patent Office

Office européen des brevets

(19)

(11) Veröffentlichungsnummer: **0 329 979**

**A2**

## (12) EUROPÄISCHE PATENTANMELDUNG

(21) Anmeldenummer: **89101524.0**

(22) Anmeldetag: **30.01.89**

(51) Int. Cl.⁴: **G06F 3/023**

(30) Priorität: **26.02.88 DE 8802507 U**

(43) Veröffentlichungstag der Anmeldung:
**30.08.89 Patentblatt 89/35**

(84) Benannte Vertragsstaaten:
**CH DE FR GB IT LI NL SE**

(71) Anmelder: **Preh-Werke GmbH & Co. KG**
**Postfach 1740 An der Stadthalle**
**D-8740 Bad Neustadt/Saale(DE)**

(72) Erfinder: **Oelsch, Jürgen, Dipl.-Ing.**
**Saaleblick 23**
**D-8741 Hohenroth(DE)**
Erfinder: **Hochgesang, Gerhard**
**Schweinhofer Strasse 39**
**D-8740 Bad Neustadt/S. Lebenhan(DE)**
Erfinder: **Limpert, Rudolf, Dipl-Math.**
**Stadtblick 15**
**D-8740 Salz(DE)**
Erfinder: **Weber, Dieter, Dipl.-Ing. (FH)**
**Am Grasberg 22**
**D-8741 Stockheim(DE)**

(54) **Dateneingabevorrichtung.**

(57) Zur Vereinfachung der Herstellung und des Handels von Dateneingabevorrichtungen, bestehend aus einer Eingabetastatur (1) und einem Anschlußverbinder (5) ist vorgeschlagen, die Encoderelektronik (9) im Anschlußverbinder (5) anzuordnen.

Fig. 1

EP 0 329 979 A2

## Dateneingabevorrichtung

Die Erfindung betrifft eine Dateneingabevorrichtung gemäß dem Oberbegriff des Hauptanspruches.

Solche Dateneingabevorrichtungen sind heutzutage verbreitet z.B. im gewerblichen, industriellen, postalischen oder privaten Bereich im Einsatz, u.a. in Verbindung mit PC's. Ihre jeweilige Encoderelektronik koordiniert den Tastencode mit dem Code der zugehörigen Datenverarbeitungseinrichtung. Die marktbekannte Multifunktions-Eingabetastatur des PS/2-Systems von IBM ist mit Encoderelektronik in der Eingabetastatur und Steckanschluß ausgestattet. Eine andere Eingabetastatur mit Encoderelektronik zeigt das Firmenprospekt "Preh Commander" 1.308 der Fa. Preh.

Wird ein Computer einer Datenverarbeitungseinrichtung ausgetauscht, oder was häufiger vorliegt, eine Tastatur ersetzt, so ist vielmals der Code der Dateneingabevorrichtung dem Code-System der zugehörigen Datenverarbeitungseinrichtung anzupassen. Die Anpassung erfolgt durch Eingriffe in die Encoderelektronik.

Ist innerhalb einer Eingabetastatur die Funktion einer Taste z.B. anwendungsorientiert zu verlegen auf eine andere Taste, erfolgt dies gleichfalls durch Eingriffe in die Encoderelektronik, sofern die Datenverarbeitungseinrichtung eine solche Verlegung nicht auf anderem Weg ermöglicht. Die EP 0 047 078 informiert am Beispiel eines Kleinrechners, daß Umprogrammierungen mittels in das Gerät einschiebbare Magnetkarten vornehmbar sind. Solche Magnetkarten erfordern jedoch spezielle Übermittlungseinrichtungen.

Im Stand der Technik ist die Encoderelektronik innerhalb der Eingabetastatur angeordnet. Ist ein Eingriff in die Encoderelektronik geboten, so ist das Gehäuse der Tastatur zu öffnen, das zur z.B. Umprogrammierung erforderliche Elektronikbauteil aus seiner Einbettung im Schaltkreis zu entnehmen und in einer Programmiereinrichtung zu behandeln. Danach wird das Elektronikbauteil wieder in den Schaltkreis eingesetzt und abschließend das Tastatur-Gehäuse wieder verschlossen. Einen solchen Eingriff kann in der Regel nur der Hersteller, seiten der Händler, vornehmen; der Eingriff ist aufwendig und gefährdet die Qualität.

Will man den Aufwand zur Umprogrammierung und die Gefährdung der Qualität vermeiden, so sind entsprechend der Vielzahl von gebräuchlichen Datenverarbeitungssystemen und der Vielzahl von Anwendungsgebieten eine entsprechende Vielzahl unterschiedlicher Dateneingabevorrichtungen zu produzieren und zu bevorraten. Dieses Unterfangen ist wenig rationell, bindet viel Geld und verlangt große Lagerkapazität.

Es ist daher Aufgabe der Erfindung, eine sowohl in der Herstellung als auch in der Lagerhaltung standardisierbare Dateneingabevorrichtung der eingangs bezeichneten Art vorzuschlagen, die ohne fachmännischen Beistand auch im Handel an die Erfordernis des jeweiligen Anwendungsfalles adaptierbar ist.

Erfindungsgemäß wird als Lösung vorgeschlagen, daß zumindest der das Programm bestimmende Teil der Encoderelektronik von der Eingabetastatur trennbar im Tastaturstecker angeordnet ist.

Der Erfindung liegt der Gedanke zugrunde, die Encoderelektronik aus der kostenintensiven Tastatur zu entnehmen und sie einem anderen, möglichst vorhandenen, jedoch weniger kostenintensiven Teil beizuordnen, das als separates Teil unabhängig von der volumigen Tastatur zu handhaben ist. Dieses Teil erhält man mit einem steckbaren Anschlußverbinder, in dem die Encoderelektronik integriert ist. Ein solcher Steck-Anschlußverbinder ist gegenüber der kompletten Dateneingabevorrichtung preisgünstiger, benötigt weniger Lagerraum und eignet sich somit vorteilhaft für die Bereithaltung einer Vielzahl unterschiedlich programmierter Encoder. Außerdem führt die Lösung der Erfindungsaufgabe hin zu einer rationell herstellbaren und für eine Vielzahl unterschiedlicher Encoderprogramme gleichermaßen geeigneten Standard-Eingabetastatur, z.B. einer Multifunktions-Tastatur mit 101 Eingabetasten. Bei Anordnung der Encoderelektronik, zumindest des das Programm bestimmenden Teiles, im Tastaturstecker des Anschlußverbinders entfällt ein eigenes EncoderGehäuse.

Eine Encoderelektronik enthält je nach Ausstattung beispielsweise löschbare Speicher-IC, Treiber-IC, zum Teil integriert in uP oder uC, Taktgeber, periphere Dioden, Kondensatoren und Widerstände. Mit der heute erreichten Konzentration und Kleinheit bei Bauelementen bereitet das Einbringen der Encoderelektronik in das Gehäuse des Tastatursteckers kein Problem.

Ist die Encoderelektronik mit einem EPROM bzw. EEPROM als löschbaren Programmspeicher ausgerüstet, so kann sie vorteilhaft als StandardWare hergestellt und bevorratet werden. Die anwendungsbezogene Programmierung erfolgt z.B. bei Aushändigung an den Benutzer.

Sind die der Programmierung der Encoderelektronik dienenden Anschlüsse des IC in zur Programmierung geeigneter Weise verbunden mit den Steckanschlüssen des Tastatursteckers, so kann die Um- oder Nachprogrammierung über diese Steckanschlüsse einfachst vollzogen werden. Die Trennung der Encoderelektronik von den weiteren Schaltungen der Einrichtung erfolgt bereits mit dem Ziehen der Stecker des Anschlußverbinders. Ohne Öffnen des Tastatursteckers wird dieser mit seinen Steckanschlüssen in eine entsprechende Programmiereinheit gesteckt und die Encoderelektronik wunschgemäß programmiert.

Mit der Erfindung kann somit in vorteilhafter Weise die gesamte Dateneingabevorrichtung, also sowohl die Eingabetastatur, als auch der Anschlußverbinder und die Encoderelektronik, anwendungsneutral hergestellt und auch bevorratet werden. Der Hersteller oder der Händler um- bzw. neuprogrammiert die Encoderelektronik der Dateneingabevorrichtung einfach und schnell mittels einer Programmiereinrichtung gemäß den Erfordernissen des Käufers. Dabei wird die Encoderelektronik dem erheblich reduzierten, standardisierten Lagervorrat entnommen und vor Übergabe an den Käufer anwendungsbezogen programmiert.

In einer Ausgestaltung der Erfindung wird der Tastaturstecker vereinfacht. Die Leiterplatte der Encoderelektronik dient mit ihrem Randbereich als Steckkontakt. Eine weitere Ausgestaltung vereinfacht das Löschen eines in einem IC, z.B. EPROM, gespeicherten Programmes, indem das Steckteil bzw. der Tastaturstecker eine verschließbare Öffnung ererhält, ausgerichtet an dem EPROM der Encoderelektronik. Eine Entnahme des IC ist dabei nicht erforderlich; der IC kann auf der Printplatte verlötet sein.

Nachfolgend wird ein Ausführungsbeispiel anhand von Zeichnungen erläutert.

In den Figuren zeigen:

Figur 1 eine Gesamtansicht der erfindungsgemäßen Dateneingabevorrichtung mit steckbarem Anschlußverbinder,

Figur 2 eine Halbschale des Tastatursteckers der Dateneingabevorrichtung mit der Encoderelektronik, vergrößert,

Figur 3 die schematische Gliederung der Dateneingabevorrichtung gemäß Figur 1 und desgleichen in

Figur 4 den Stand der Technik gegenüber Figur 3.

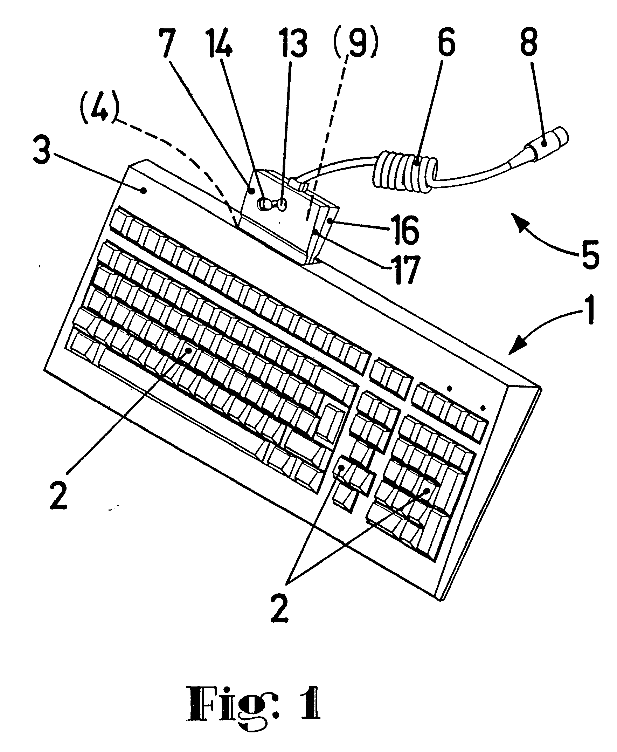

Die Dateneingabevorrichtung der Figur 1 zeigt eine Eingabetastatur (1) mit einem Gehäuse (3) und mehreren im Gehäuse (3) angeordneten Tastenfeldern (2). Am Gehäuse befindet sich ein Steckanschluß (4), an dem die Anschlußleitungen der Tastenmatrix der Tastenfelder (2) enden. Ein Anschlußverbinder (5) verbindet elektrisch die Eingabetastatur (1) mit einer Datenverarbeitungseinrichtung (nicht dargestellt). Der Anschlußverbinder (5), mit einem Verbindungskabel (6), einem Tastaturstecker (7) für die Eingabetastatur (1) und einen Anschlußstecker (8) für die Datenverarbeitungseinrichtung, steckt mit seinem Tastaturstecker (7) im Steckanschluß (4) der Eingabetastatur (1) und verbindet beide (1, 5) elektrisch.

Die Encoderelektronik (9) ist in Figur 1 erfindungsgemäß im Tastaturstecker (7) angeordnet.

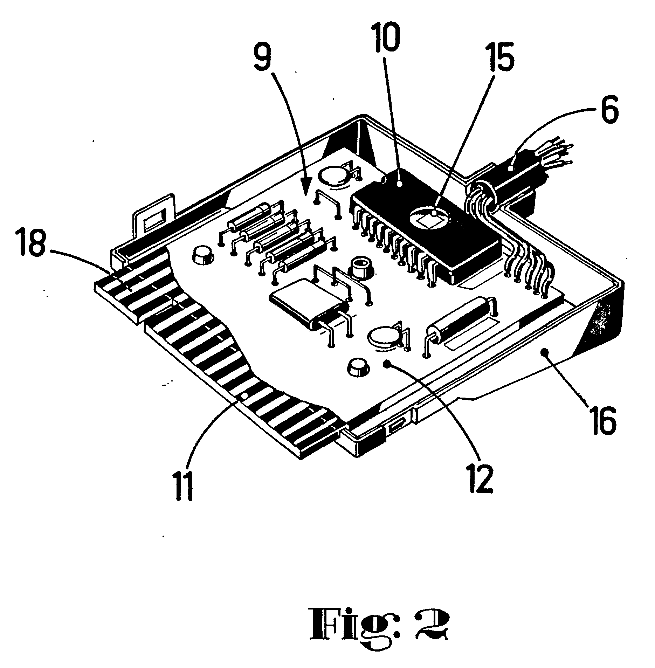

Figur 2 zeigt eine Halbschale (16) des geöffneten Tastatursteckers (7) der Figur 1. Innerhalb der Halbschale (16) ist eine Leiterplatte (12) angeordnet mit den Leitungszügen und Bauelementen der Encoderelektronikschaltung (9). Die Leiterplatte (12) überragt in einem Teilbereich (18) die Halbschale (16). In diesem Teilbereich (18) sind die Enden (11) der Leitungszüge der Leiterplatte (12) als im Raster liegende Steckkontakte (11) ausgebildet. Bei in den Steckanschluß (4) der Eingabetastatur (1) eingestecktem Tastaturstecker (7) sind die Steckkontakte (11) mit den entsprechenden Anschlußenden der Tastenmatrix der Tastenfelder (2) elektrisch verbunden. Die Encoderelektronik (9) enthält neben weiteren Bauelementen als programmierbaren IC einen uC (10) mit integriertem EPROM; ein solcher Mikro-Computer ist z.B. der MC68705P von Motorola. Die andere Halbschale (17) des Tastatursteckers (7) enthält eine an dem Fenster (15) des integrierten EPROM ausgerichtete, mittels einer Kappe (14) verschließbare Öffnung (13).

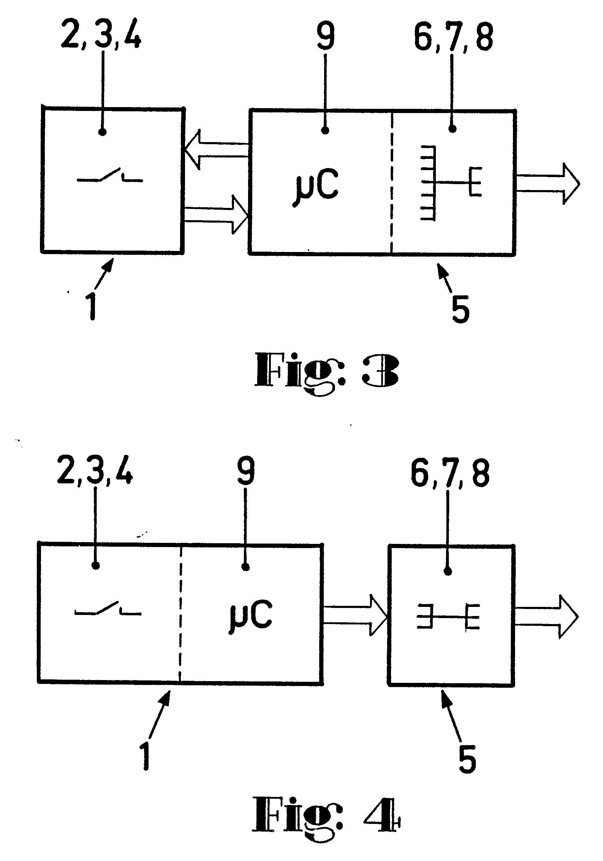

Die Figur 3 zeigt schematisch die erfindungsgemäße Gliederung einer Dateneingabevorrichtung. Vergleichsweise zu Figur 3 zeigt Figur 4 den Stand der Technik.

An der Schnittstelle Eingabetastatur/Anschlußverbinder (4, 7) erhöht sich durch das Herausnehmen der Encoderelektronik (9) aus der Eingabetastatur (1) die Anzahl erforderlicher Steckverbindungskontakte gegenüber dem Stand der Technik.

Soll eine Dateneingabevorrichtung neu- bzw. umprogrammiert werden, so ist allein der Anschlußverbinder (5) zu handhaben. Nach dem Abziehen der Steckkontakte (7, 8) aus ihrer Betriebsposition und dem Öffnen der Kappe (14) des Tastatursteckers (7) wird das Fenster (15) des elektronischen Speichers (10) durch die Öffnung (13) in der Halbschale (17) des Tastatursteckers (7) hindurch mit UV-Licht bestrahlt. Die Bestrahlung neutralisiert den Speicherinhalt des EPROM'S (10). Daraufhin wird der Tastaturstecker (7) mit seinen Kontakten (11) in eine entsprechende Aufnahme einer Programmiereinrichtung (nicht dargestellt) gesteckt und die Encoderelektronik (9) nach Inbetriebnahme der Einrichtung durch diese neu programmiert. Der Anschlußverbinder (5) wird der Programmiereinrichtung entnommen und wieder seiner Betriebsposition zugeführt; der Tastencode wird entsprechend dem neuen Programm der Encoderelektronik (9) kodiert der Datenverarbeitungseinrichtung zugeführt.

Unprogrammierte Anschlußverbinder (5) werden seitens des Herstellers dem einheitlich vorgefertigten Lagervorrat entnommen und anwendungsbezogen nach Angaben des Kunden bei Auslieferung programmiert. Das Löschen des EPROM'S (10) kann in dieser Situation entfallen. Der Hersteller kann rationell ohne Beachtung des späteren Einsatzes eine Standard-Eingabetastatur (1) produzieren.

**Bezugszeichenliste 01/88**

1 Eingabetastatur
2 Tastenfeld
3 Gehäuse
4 Steckanschluß
5 Anschlußverbinder
6 Verbindungskabel
7 Tastaturstecker
8 Anschlußstecker
9 Encoderelektronik
10 I C
11 Steckkontakt
12 Leiterplatte
13 Öffnung
14 Kappe
15 Fenster
16 Halbschale
17 Halbschale
18 Teilbereich

**Ansprüche**

1. Dateneingabevorrichtung einer elektrischen Datenverarbeitungseinrichtung, bestehend aus einer Eingabetastatur mit Tastenfeld, Gehäuse und Steckanschluß, einem Anschlußverbinder mit Verbindungskabel, Tastaturstecker und Anschlußstecker zur Datenverarbeitungseinrichtung, und einer programmierbaren Encoderelektronik,
dadurch gekennzeichnet,
daß zumindest der das Programm bestimmende Teil der Encoderelektronik (9) von der Eingabetastatur (1) trennbar im Tastaturstecker (7) angeordnet ist.

2. Dateneingabevorrichtung nach Anspruch 1,
dadurch gekennzeichnet,
daß der das Programm bestimmende Teil der Encoderelektronik (9) einen umprogrammierbaren IC (10) als Programmspeicher enthält.

3. Dateneingabevorrichtung nach Anspruch 2,
dadurch gekennzeichnet,
daß die der Programmierung dienenden Anschlüsse des IC (10) in zur Programmierung geeigneter Weise mit Steckkontakten (11) des Tastaturstekkers (7) verbunden sind.

4. Dateneingabevorrichtung nach Anspruch 3,
dadurch gekennzeichnet,
daß die Steckkontakte (11) des Tastatursteckers (7) Teil einer Leiterplatte (12) sind.

5. Dateneingabevorrichtung nach einem der Ansprüche 2 bis 4,
dadurch gekennzeichnet,
daß die Encoderelektronik (9) als Programmierelement einen UV-löschbaren IC (10) enthält, über dessen Fenster (15) eine z.B. mittels einer Kappe (14) verschließbare Öffnung (13) des Tastatursteckers (7) angeordnet ist.

**Fig. 1**

**Fig. 2**

**Fig. 3**

**Fig. 4**

PREH 1/88